(19) Europäisches Patentamt
European Patent Office
Office européen des brevets

(11) EP 1 826 757 A2

(12) **EUROPEAN PATENT APPLICATION**

(43) Date of publication:
**29.08.2007 Bulletin 2007/35**

(51) Int Cl.:
**G11B 7/135** (2006.01)

(21) Application number: **07003887.2**

(22) Date of filing: **26.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.02.2006 JP 2006051284**

(71) Applicant: **KABUSHIKI KAISHA TOSHIBA**
**Tokyo 105-8001 (JP)**

(72) Inventor: **Hirono, Masatoshi**
**Tokyo 105-8001 (JP)**

(74) Representative: **HOFFMANN EITLE**
**Patent- und Rechtsanwälte**
**Arabellastrasse 4**
**81925 München (DE)**

(54) **Optical-pickup head device, and method and apparatus for reproducing optical storage medium**

(57) A light source (100) outputs an optical beam. A condensing unit (105) condenses the optical beam to a first information-recording layer (106). An optical detecting unit (111, 1011) detects a reflected optical beam reflected from the optical storage medium (115). A limiting element (114, 1004) inputs a first reflected optical beam reflected from the first information-recording layer (106) to the optical detecting unit (111, 1011), and limits or shields an input of a second reflected optical beam reflected from a second information-recording layer (107) to the optical detecting unit (111, 1011).

FIG.1

**Description**

CROSS-REFERENCE TO RELATED APPLICATIONS

This application is based upon and claims the benefit of priority from the prior Japanese Patent Application No. 2006-51284, filed on Feb. 27, 2006; the entire contents of which are incorporated herein by reference.

BACKGROUND OF THE INVENTION

1. Field of the Invention

The present invention relates to a technology for reducing an interlayer crosstalk generated from a single-sided multilayer optical disk.

2. Description of the Related Art

A single-sided multilayer optical disk in which a plurality of information-recording layers are provided has been developed to realize high capacity of an optical disk. Among the information-recording layers, a layer targeted for recording or reproducing information is assumed as a target layer while the other layers are assumed as non-target layers. An optical-pickup head device for the single-sided multilayer optical disk records information to and reproduces information from the target layer from among the information-recording layers, by condensing an optical beam on the target layer and receiving a reflected optical beam from the target layer. The optical beam is output from a semiconductor laser as a light source. The optical beam is transmitted through a polarizing beam splitter, deflected by a mirror so that the optical beam is incident on the optical disk in a normal direction, transmitted through a polarizing element, and condensed onto the target layer by an objective lens. The optical beam is reflected from the target layer, and the reflected optical beam is transmitted through the polarizing element again, so that a polarization of the reflected optical beam is converted into a linear polarization substantially orthogonal to a direction of polarization of the incident optical beam. The optical beam is then reflected at the polarizing beam splitter, and condensed on a light receiving element of an optical detecting unit through a detecting lens.

With the single-sided multilayer optical disk, the recording of data to and the reproduction of data from the information-recording layers can be realized through a single side of the optical disk because the information-recording layers, other than the last information-recording layer arranged farthest from a surface of the optical disk on which the laser beam is incident, are semitransparent. For this reason, a reflected optical beam from the non-target layer is largely defocused when the reflected optical beam is irradiated on the light receiving element of the optical detecting unit, which causes an interlayer crosstalk. Because the reflected optical beam from the non-target layer causes a stray beam, detection signals of the optical detecting unit become degraded.

For reducing the interlayer crosstalk, for example, JP-A 2004-281026(KOKAI) discloses a technology for removing the stray beam from push-pull signals by excluding an area around the optical axis of the reflected optical beam from areas of detecting an optical beam used for generating push-pull signals.

However, because the conventional technology is only for limiting the area around the optical axis of the reflected optical beam reflected from the non-target layer, so that the area is not to be used for the push-pull signals, first-order diffracted beams necessary for generating the push-pull signals cannot be completely removed. In other words, because the first-order diffracted beams from among the reflected optical beams reflected from two adjacent information-recording layers are overlapped near the center portion, it is difficult to remove the stray beam from the push-pull signals and to completely remove the interlayer crosstalk by simply excluding the optical beams in the area around the optical axis of the reflected optical beam.

SUMMARY OF THE INVENTION

An optical-pickup head device according to one aspect of the present invention is for an optical storage medium that includes a plurality of information-recording layers. The optical-pickup head device includes a light source that outputs an optical beam; a condensing unit that condenses the optical beam to a first information-recording layer; an optical detecting unit that detects a reflected optical beam reflected from the optical storage medium; and a limiting element that inputs a first reflected optical beam reflected from the first information-recording layer to the optical detecting unit, and limits or shields an input of a second reflected optical beam reflected from a second information-recording layer to the optical detecting unit.

An apparatus for reproducing an optical storage medium that includes a plurality of information-recording layers, according to another aspect of the present invention, includes a light source that outputs an optical beam; a condensing unit that condenses the optical beam to a first information-recording layer; an optical detecting unit that detects a reflected optical beam reflected from the optical storage medium; and a limiting element that inputs a first reflected optical beam reflected from the first information-recording layer to the optical detecting unit, and limits or shields an input of a second reflected optical beam reflected from a second information-recording layer to the optical detecting unit.

A method of reproducing an optical storage medium that includes a plurality of information-recording layers, according to still another aspect of the present invention, includes condensing an optical beam output from a light source to a first information-recording layer; detecting including an optical detecting unit detecting a reflected optical beam reflected from the optical storage medium; and limiting including inputting a first reflected optical beam reflected from the first information-recording layer to the optical detecting unit, and either one of limiting and shielding an input of a second reflected optical beam reflected from a second information-recording layer to the optical detecting unit.

BRIEF DESCRIPTION OF THE DRAWINGS

Fig. 1 is a schematic of an optical system in an optical-storage-medium reproducing apparatus according to a first embodiment of the present invention;
Fig. 2 is a schematic for explaining an optical beam condensed on an information-recording layer in a single-sided dual-layer optical disk according to the first embodiment;
Fig. 3 is a schematic for explaining an irradiation of an optical beam on an optical detecting unit, with which optical intensity is limited in a predetermined area including an optical axis of an optical beam reflected from a target layer, according to the first embodiment;
Fig. 4 is a schematic for explaining an irradiation of an optical beam onto the optical detecting unit, with which the optical intensity is limited in a predetermined area including an optical axis of an optical beam reflected from a non-target layer, according to the first embodiment;
Fig. 5 is a schematic for explaining a distribution of a reflected optical beam projected on the optical detecting unit, according to the first embodiment;
Fig. 6 is a schematic of an optical system in an optical-storage-medium reproducing apparatus according to a second embodiment of the present invention;
Fig. 7 is a schematic for explaining a reflection of a reflected zeroth-order diffracted beam, according to the second embodiment;
Fig. 8 is a schematic for explaining a reflection of reflected first-order diffracted beams, according to the second embodiment;
Fig. 9 is a schematic for explaining how to determine a center portion of a push-pull area, according to the second embodiment;
Fig. 10 is a schematic for explaining how to determine each center portion of two areas, through which the reflected first-order diffracted beams pass, according to the second embodiment;
Fig. 11 is a schematic of an aperture splitting of a polarizing element according to the second embodiment;
Fig. 12 is a schematic of a structure of a light receiving unit and a distribution of a reflected optical beam on the light receiving unit, according to the second embodiment;
Fig. 13 is a schematic of an aperture splitting of a polarizing element according to a third embodiment of the present invention;
Fig. 14 is a schematic of a structure of a light receiving unit and a distribution of a reflected optical beam on the light receiving unit, according to the third embodiment;
Fig. 15 is a schematic of an aperture splitting of a polarizing element according to a fourth embodiment of the present invention; and
Fig. 16 is a schematic of a light receiving unit and a distribution of a reflected optical beam on the light receiving unit, according to the fourth embodiment.

DETAILED DESCRIPTION OF THE INVENTION

Exemplary embodiments of the present invention are explained below in detail with reference to the accompanying drawings. The present invention is not limited to the embodiments, explained below.

An optical-storage-medium reproducing apparatus according to a first embodiment of the present invention is used for reproducing information recorded on a single-sided dual-layer optical disk and includes a spindle motor that rotates an optical disk, an optical-pickup head device that reads the information recorded on an optical disk, and a carriage on which the optical-pickup head device is mounted. It is assumed that the single-sided dual-layer optical disk includes a target layer that is targeted for recording or reproducing information and a non-target layer other than the target layer.

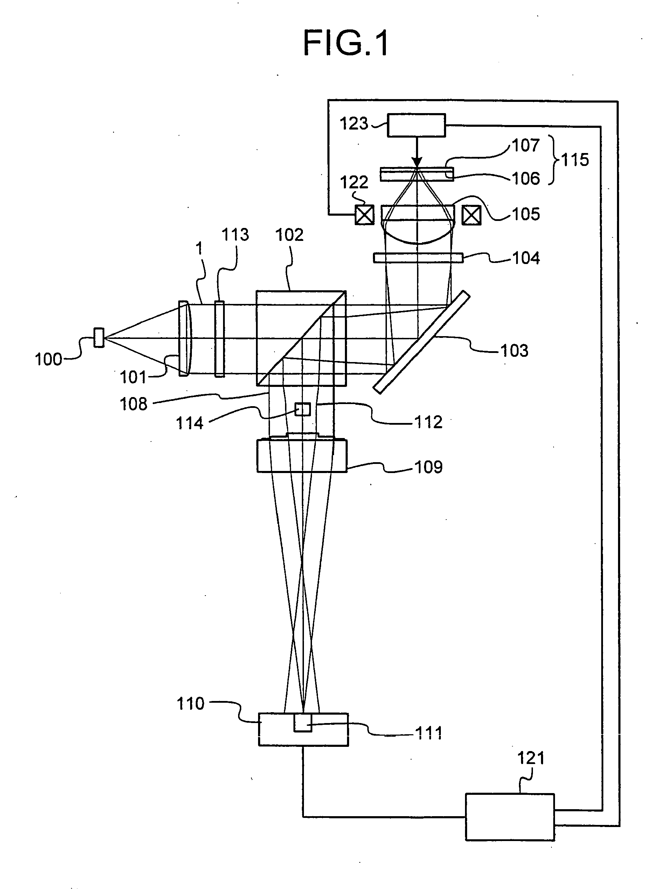

As shown in Fig. 1, an optical-storage-medium reproducing apparatus according to a first embodiment includes, as a configuration of an optical system of the optical-pickup head device, a semiconductor laser 100, a collimating lens 101, a diffractive optical element 113, a polarizing beam splitter 102, a mirror 103, a polarizing element 104, an objective lens 105, a limiting element 114, a detecting lens 109, and an optical detecting unit 110.

The semiconductor laser 100 outputs a laser light (beam) and the collimating lens 101 converts a divergent beam input from the semiconductor laser 100 into a parallel beam. The diffractive optical element 113 diffracts an incident beam into a zeroth-order diffracted beam and first-order diffracted beams (two first-order diffracted beams). The polarizing beam splitter 102 transmits a linearly polarized beam oscillating in a predetermined direction and reflects other linearly polarized beam oscillating in a direction perpendicular to the predetermined direction. In other words, the polarizing beam splitter 102 transmits an optical beam that is output from the semiconductor laser 100 and transmitted toward an optical disk 115, and reflects an optical beam that is reflected from the optical disk 115 and polarized by the polarizing element.

The mirror 103 reflects an incident beam in a normal direction to input the optical beam to the optical disk 115. The polarizing element 104 is, for example, a quarter-wave plate that converts an incoming linearly polarized beam into a circularly polarized beam and converts the incoming circularly polarized beam into the linearly polarized beam. The objective lens 105 condenses the incident beam onto the information-recording layer of the optical disk 115.

The detecting lens 109 condenses the incident beam onto the optical detecting unit 110. The optical detecting unit 110 converts power of the optical beam into an electrical signal and includes a light receiving unit 111 that receives the optical beam.

The limiting element 114 (limiting unit) limits input of an incident beam, which is reflected from the non-target layer, into the light receiving unit 111 of the optical detecting unit 110.

The optical disk 115 according to the present embodiment is, for example, a single-sided dual-layer optical storage medium including two information recoding layers that are laminated as reproducing and recording layers. For the sake of explanation, it is assumed that a target layer 106 is targeted for recording and reproducing information while a non-target layer 107 is not targeted for recording and reproducing information. A reflection film of the target layer 106 laminated on a side of a surface of the optical disk is made of a semitransparent material, so that information can be reproduced from or recorded to both the target layer 106 and the non-target layer 107 through a single side of the optical disk 115. According to the present embodiment, the optical disk 115 is, for example, a digital versatile disc-recordable (DVD-R) or a digital versatile disc-rewritable (DVD-RW), each of which has a land/groove structure.

The optical beam output from the semiconductor laser 100 is converted into a parallel beam by the collimating lens 101 and diffracted into the zeroth-order diffracted beam as a main beam and the plus/minus first-order diffracted beam as sub beams by the diffractive optical element 113. The diffracted beam is input into the polarizing beam splitter 102 as the linearly polarized beam and virtually 100% of the input beam is transmitted through the polarizing beam splitter 102. The zeroth-order diffracted beam and the first-order diffracted beams that have been transmitted through the polarizing beam splitter 102 are reflected by the mirror 103 to be input into the optical disk 115 in a normal direction. Thereafter, the zeroth-order diffracted beam and the first-order diffracted beams are converted into the circularly polarized beams by the polarizing element 104 and condensed on the information-recording layer of the optical disk 115 through the objective lens 105. According to Fig. 1, only the zeroth-order diffracted beam that is input into the optical disk 115, a reflected optical beam 108 of the zeroth-order diffracted beam reflected from the target layer 106, and a reflected optical beam 112 of the zeroth-order diffracted beam reflected from the non-target layer 107 are shown.

The optical-storage-medium reproducing apparatus according to the first embodiment further includes a spindle motor 123 that rotates the optical disk 115, and includes, inside of the optical-pickup head device, an actuator 122 and a control unit 121 that shift the objective lens 105 in a radial direction of the optical disk and in a normal direction perpendicular to the radial direction.

The control unit 121 drives the actuator 122 based on a signal output from the light receiving unit 111 of the optical detecting unit 110, for performing focus servo and tracking servo. According to the first embodiment, the focus servo is performed using the knife edge method and the tracking servo is performed using the differential push-pull (DPP) method. Further, the control unit 121 controls rotation of the spindle motor 123.

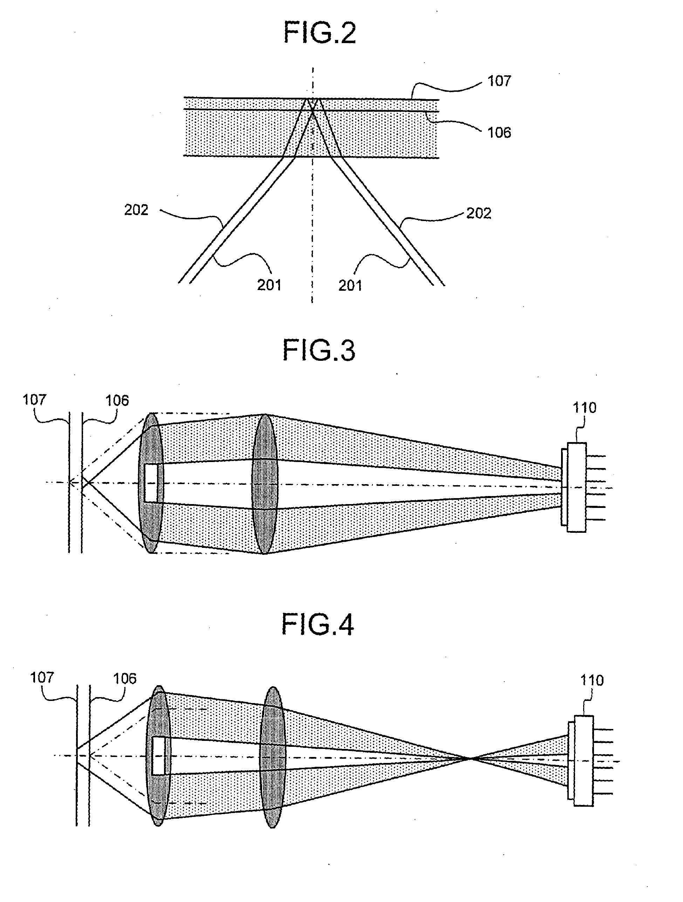

An optical beam condensed on the target layer 106 of the single-sided dual-layer optical disk 115 is shown in Fig. 2. Only the zeroth-order diffracted beam that is input into the optical disk 115 and a reflected zeroth-order diffracted beam reflected from the target layer 106 and the non-target layer 107 are shown in Fig. 2. As shown in Fig. 2, an incident beam 201 is condensed and normally reflected at the target layer 106. On the other hand, because the reflection film of the target layer 106 is semitransparent, the incident beam 201 reaches the non-target layer 107 and a reflected optical beam 202 is generated from the non-target layer 107.

Each reflected optical beam reflected from the target layer 106 and the non-target layer 107 of the optical disk 115 is input into the polarizing beam splitter 102 and virtually 100% of the input beam is reflected. Thereafter, input of the reflected optical beam 112 from the non-target layer 107 to the light receiving unit 111 is limited by the limiting element 114, while the reflected optical beam 108 from the target layer 106 is condensed and received by the light receiving unit 111.

The limiting element 114 limits an irradiation of the reflected optical beam 112 from the non-target layer 107 onto the light receiving unit 111, by limiting optical intensity of an optical beam in a predetermined area including optical axes of the reflected optical beams 108 and 112 that irradiate the light receiving unit 111 of the optical detecting unit 110. The limiting element 114 is, for example, an aperture limiting element and a partial attenuation filter. Further, the limiting element 114 can be a liquid crystal element that electrically modulates a limitation pattern or a limitation level.

As shown in Figs. 3 and 4, the optical beam reflected from the non-target layer 107 is not conjugated to the light receiving unit 111 of the optical detecting unit 110, resulting in being largely defocused in the irradiation on the optical detecting unit 110. Therefore, if the optical intensity of the optical beam in the predetermined area including the optical axis of the reflected optical beam is limited, intensity distribution of the area, in which the optical intensity of the optical beam is limited, is to be projected on the optical detecting unit 110. As a result, the irradiation of the reflected optical beam is limited in an area corresponding to the area in which the optical intensity of the optical beam is limited.

On the other hand, the reflected optical beam reflected from the target layer 106 is conjugated to the light receiving unit 111 of the optical detecting unit 110, resulting in being condensed, with an optical spot formed, onto the light receiving unit 111, even when the optical intensity of the optical beam is limited in the predetermined area including the optical axis.

Accordingly, it is necessary to determine a size of the limiting element 114 so that a size of the area, in which the irradiation of the reflected optical beam on the optical detecting unit 110 is limited, becomes bigger than the size of the light receiving unit 111.

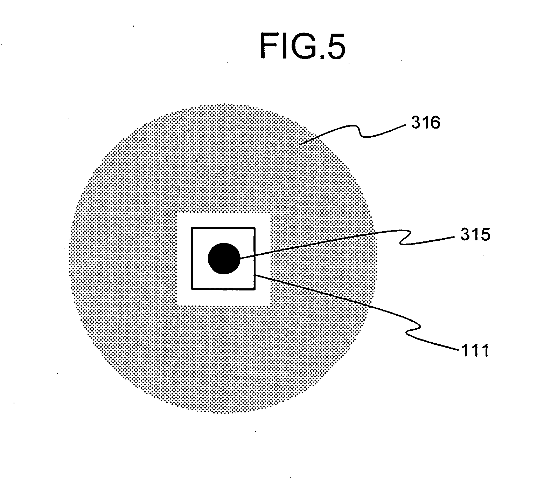

In Fig. 5, the reflected optical beam 108 generated when the zeroth-order diffracted beam is reflected from the target layer 106 and the reflected optical beam 112 generated when the zeroth-order diffracted beam is reflected from the non-target layer 107 are irradiated on the optical detecting unit 110.

With a reference numeral 315, an optical spot is shown, which is formed when the reflected optical beam 108 from the target layer 106 is irradiated on the optical detecting unit 110. With a reference numeral 316, an area is shown in which the reflected optical beam 112 from the non-target layer 107 is defocused on the optical detecting unit 110. The irradiation of the reflected optical beam 112 is limited at the center portion of the area shown with the reference numeral 316.

As shown in Fig. 5, the size of the limiting element 114 is determined so that the size of the area in which the irradiation of the reflected optical beam 112 is limited can become bigger than the size of the light receiving unit 111.

According to the first embodiment, the limiting element 114 that limits the optical beam in the predetermined area including the optical axis is installed between the polarizing beam splitter 102 and the detecting lens 109. Further, the size of the limiting element 114 is determined so that the area in which the reflected optical beam 112 from the non-target layer 107 is irradiated can become bigger than the size of the light receiving unit 111 in which the reflected optical beam 108 from the target layer 106 is condensed to form a spot. As a result, the reflected optical beam 108 from the target layer 106 and the reflected optical beam 112 from the non-target layer 107 can be separated and interlayer crosstalk can be reduced.

According to the first embodiment, although the limiting element 114 is installed between the polarizing beam splitter 102 and the detecting lens 109, configurations are not thus limited and the limiting element 114 can be installed between the optical detecting unit 110 and the detecting lens 109. Further, according to the first embodiment, although the limiting element 114 limits the optical intensity of the reflected optical beam from the non-target layer 107, the limiting element 114 can be configured to shield the reflected optical beam from the non-target layer 107.

According to the first embodiment, it is configured so that the limiting element 114, installed between the polarizing beam splitter 102 and the detecting lens 109, limits the reflected optical beam from the non-target layer 107. On the contrary, an optical-pickup head device according to a second embodiment is configured so that a polarizing element installed between the objective lens 105 and the mirror 103 limits the reflected optical beam from the non-target layer 107.

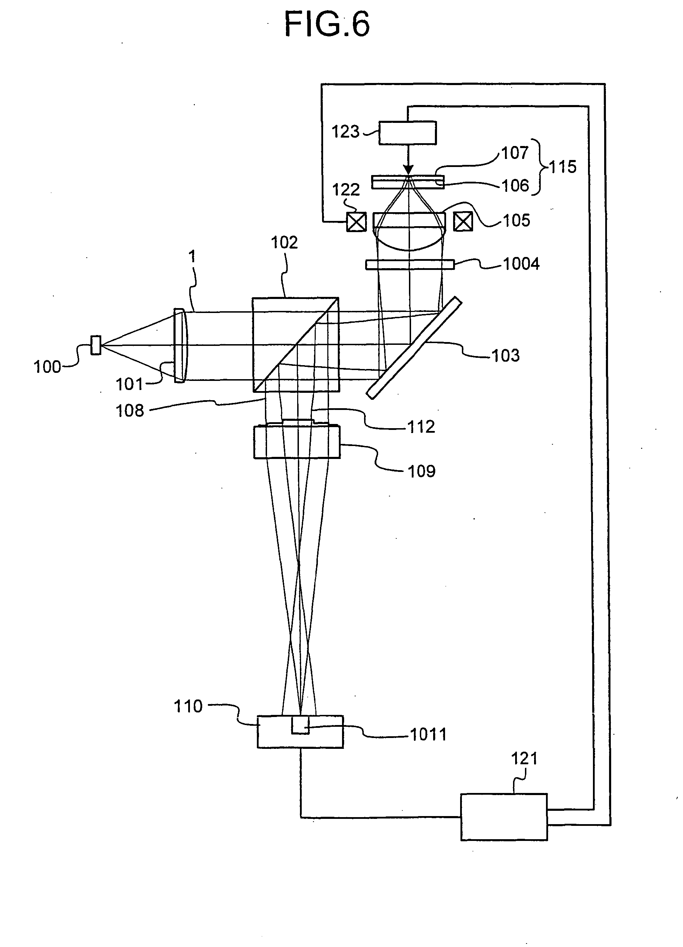

An optical-storage-medium reproducing apparatus according to the second embodiment includes, as with the same configuration of the first embodiment, the spindle motor 123 that rotates the optical disk 115, the optical-pickup head device that reads information recorded on the optical disk 115, and the carriage on which the optical-pickup head device is mounted. As shown in Fig. 6, an optical-storage-medium reproducing apparatus according to a second embodiment includes, as the configuration of the optical system in the optical-pickup head device according to the second embodiment, the semiconductor laser 100, the collimating lens 101, the polarizing beam splitter 102, the mirror 103, a polarizing element 1004 (limiting unit), the objective lens 105, the detecting lens 109, and the optical detecting unit 110.

Each of the semiconductor laser 100, the collimating lens 101, the polarizing beam splitter 102, the mirror 103, the objective lens 105, and the detecting lens 109 includes the same functions as those explained in the first embodiment. Further, the optical-storage-medium reproducing apparatus according to the second embodiment also includes, as with the same configuration of the first embodiment, the spindle motor 123, and the actuator 122 and the control unit 121 inside the optical-pickup head device.

With the control unit 121 in the optical-storage-medium reproducing apparatus according to the second embodiment, a focusing servo is performed using the knife edge method and a tracking servo is performed using the push-pull method.

The optical-pickup head device according to the second embodiment is different from the optical-pickup head device of the first embodiment in that the polarizing element 1004 diffracts the reflected optical beam from the non-target layer 107, so that the irradiation of the reflected optical beam onto the light receiving unit 111 of the optical detecting unit 110 is limited.

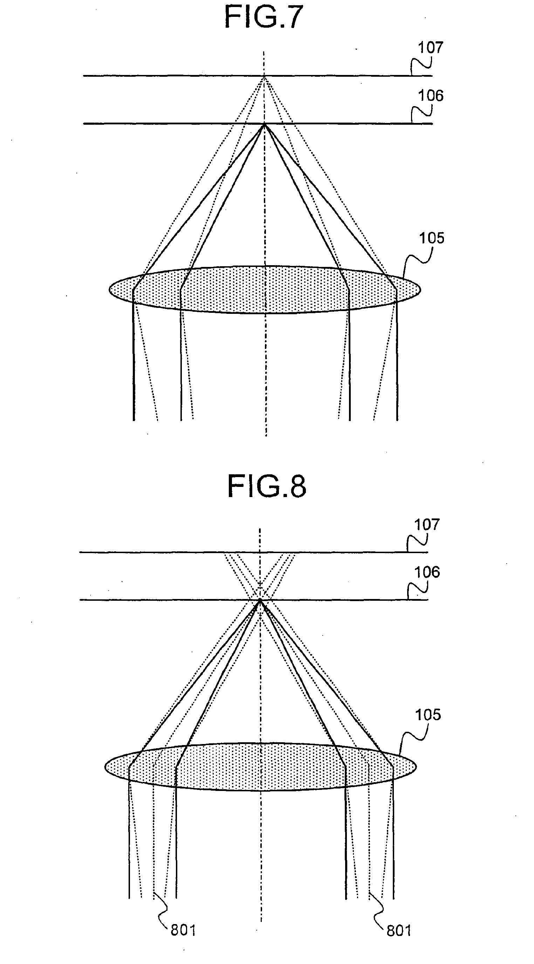

In Fig. 7, solid lines represent light paths of the reflected optical beam reflected from the target layer 106, while dotted lines represent light paths of the reflected optical beam reflected from the non-target layer 107. In Fig. 7, the two reflected zeroth-order diffracted beams are entirely overlapped in a light beam that passes on the optical axis.

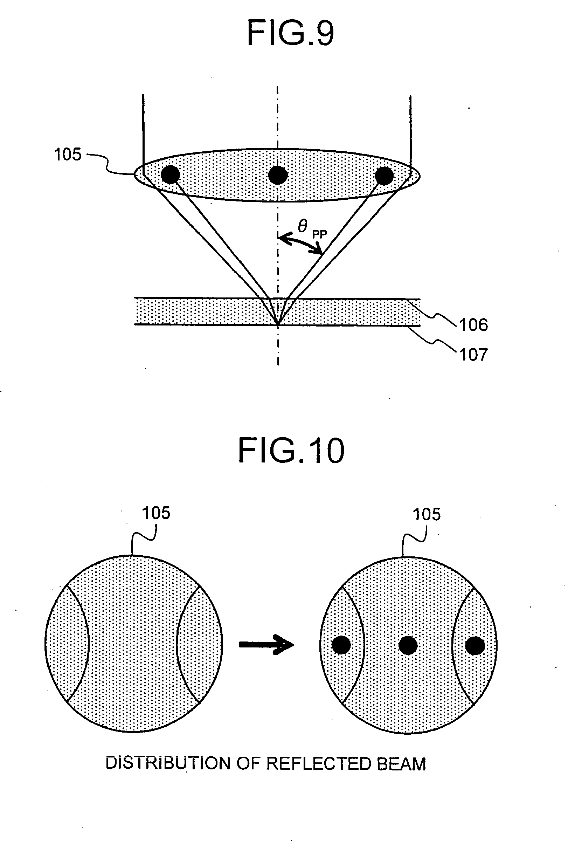

In Fig. 8, solid lines represent light paths of the reflected optical beam reflected from the target layer 106, while dotted lines represent light paths of the reflected optical beam reflected from the non-target layer 107. In Fig. 8, the two reflected first-order diffracted beams are entirely overlapped as a light beam 801 that passes a center portion of an area (hereinafter, "push-pull area") through which the reflected first-order diffracted beams used for push-pull signals pass. As described, the first-order diffracted beams reflected from the two adjacent information-recording layers are overlapped at the center portion of the push-pull area. Therefore, a stray beam cannot be limited and the interlayer crosstalk cannot be reduced only by limiting the reflected optical beam around the optical axis.

Accordingly, if the zeroth-order diffracted beam reflected from the non-target layer 107 is diffracted in the area around the optical axis, and if the first-order diffracted beams reflected from the non-target layer 107 are diffracted at the center portion of the push-pull area, input of the reflected optical beam from the non-target layer 107 to the light receiving unit 111 can be limited.

As shown in Fig. 9, a reflection angle of the overlapped beams of the reflected first-order diffracted beams can be expressed by

$$\sin\theta_{pp}=\lambda/(2a) \qquad\qquad (1)$$

where $\theta_{pp}$ is the angle from the optical axis, "$\lambda$" is a wavelength of laser beam, and "a" is a groove pitch of the optical disk.

As shown in Fig. 10, each center portion of the two areas, through which the reflected first-order diffracted beams pass, is determined with Equation (1). Accordingly, the polarizing element 1004 is required to be split into a plurality of areas so that the reflected optical beam reflected from the non-target layer 107 can be diffracted and the irradiation onto the light receiving unit 111 can be limited.

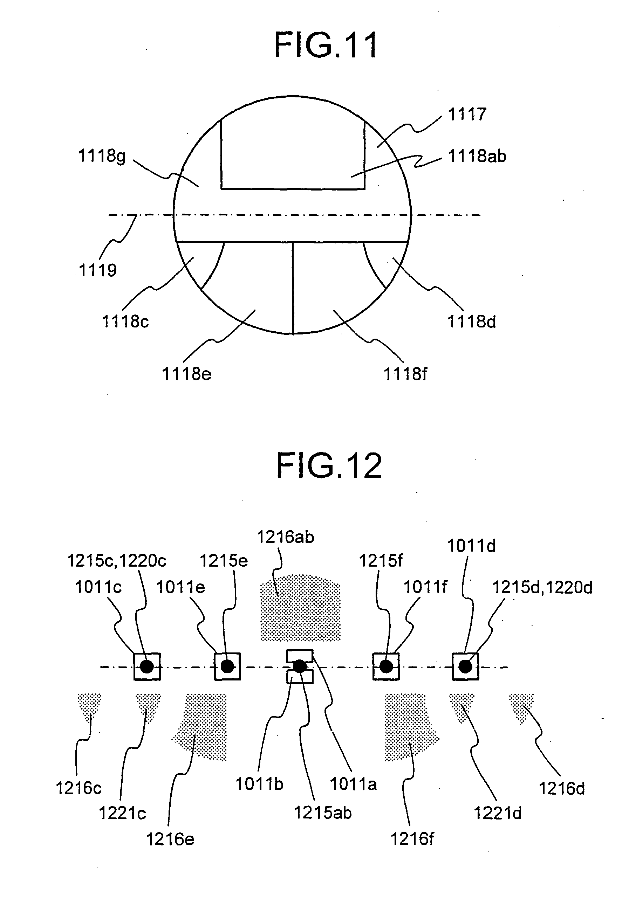

According to the second embodiment of the present invention, the polarizing element 1004 is configured using a polarizing hologram so that the reflected optical beam can be diffracted and the irradiation onto the light receiving unit 111 can be limited. As shown in Fig. 11, an aperture splitting of the polarizing element 1004 according to the second embodiment, has a configuration corresponding to a light receiving unit 1011 that can perform the focus servo using the knife edge method and the tracking servo using the push-pull method, with the reflected optical beam from the target layer 106.

An aperture 1117 of the polarizing element 1004 is split into six areas 1118ab, 1118c, 1118d, 1118e, 1118f, and 1118g. The reflected optical beam from the target layer 106 passes through the five areas 1118ab, 1118c, 1118d, 1118e, and 1118f among the six areas, and each beam from each area is detected at each of the corresponding light receiving units 1011a, 1011b, 1011c, 1011d, 1011e, and 1011f. The areas 1118c and 1118d are configured to be corresponding to areas, through which the first-order diffracted beams reflected from the target layer 106 pass. The hologram is not formed in the area 1118ab and the reflected optical beam, for a focus error signal, from the target layer 106 is output from the area 1118ab and input into the light receiving units 1011a and 1011b.

The area 1118g is formed to include portions around the optical axis, through which the zeroth-order diffracted beam reflected from the non-target layer 107 passes, and the center portion of the push-pull area, through which the first-order diffracted beams reflected from the non-target layer 107 pass. Accordingly, the zexoth-order diffracted beam and the first-order diffracted beams reflected from the non-target layer 107 can be diffracted.

According to the second embodiment, the light receiving unit 1011 of the optical detecting unit 110 is split into six areas corresponding to the aperture splitting of the polarizing element 1004. In Fig. 12, it is assumed that an arrangement order of the target layer 106 and the non-target layer 107 shown in Fig. 6 is inverted. Namely, the target layer 106 is arranged at a far side from a surface on which the optical beam is input, while the non-target layer 107 is arranged at a near side of the surface on which the optical beam is input. Further, a state in which the reflected optical beam reflected from the non-target layer 107 is defocused is shown in Fig. 12.

The light receiving unit 1011 is split into the six light receiving units 1011a, 1011b, 1011c, 1011d, 1011e, and 1011f as shown in Fig. 12. Based on a difference signal between signals generated from the light receiving units 1011a and 1011b, the focus error signal is generated using the knife edge method. Based on a difference signal between signals generated from the light receiving units 1011c and 1011d, a push-pull signal, as a tracking error signal, is generated. With the signals generated from the light receiving units 1011e and 1011f, offset of the push-pull signal caused by shifting the objective lens 105 can be adjusted.

As shown in Figs. 11 and 12, the reflected optical beam reflected from the target layer 106 is diffracted by each of the areas 1118c, 1118d, 1118e, and 1118f, with an efficiency of virtually 100%, to irradiate each of the light receiving units 1011a, 1011b, 1011c, 1011d, 1011e, and 1011f.

The area 1118g in the polarizing element 1004 diffracts the reflected optical beam from the non-target layer 107 to limit the irradiation of the reflected optical beam from the non-target layer 107 to the light receiving units 1011a, 1011b, 1011c, 1011d, 1011e, and 1011f. Specifically, the area 1118g in the polarizing element 1004 diffracts the reflected optical beam reflected from the non-target layer 107 in a direction other than directions toward the light receiving units 1011a, 1011b, 1011c, 1011d, 1011e, and 1011f.

In Fig. 12, each of areas 1215ab, 1215c, 1215d, 1215e, 1215f, 1220c, and 1220d is an optical spot at which the reflected optical beam from the target layer 106 is condensed on each of the corresponding light receiving unit 1011a, 1011b, 1011c, 1011d, 1011e, and 1011f. Areas 1216ab, 1216c, 1216d, 1216e, and 1216f depict the irradiation of the zeroth-order diffracted beam reflected from the non-target layer 107. Areas 1221c and 1221d depict the irradiation of the first-order diffracted beams reflected from the non-target layer 107.

End portions of the area 1118ab in the polarizing element 1004 are omitted to prevent end portions of a reflected optical beam 1216ab from being irradiated onto the light receiving units 1011e and 1011f, when the reflected optical beam from the non-target layer 107 is defocused.

According to the second embodiment, the zeroth-order diffracted beam and the first-order diffracted beams reflected from the non-target layer 107 can be diffracted by the polarizing element 1004 so that the irradiation to the light receiving units 1011a, 1011b, 1011c, 1011d, 1011e, and 1011f can be limited. On the other hand, the reflected optical beam reflected from the target layer 106 is condensed at each of the light receiving units 1011a, 1011b, 1011c, 1011d, 1011e, and 1011f to generate the optical spots. As a result, the reflected optical beam from the target layer 106 and the reflected optical beam from the non-target layer 107 can be separated and the interlayer crosstalk can be reduced.

According to a third embodiment, the light receiving unit of the optical detecting unit is configured to receive the reflected optical beam to perform focus control using the double knife edge method and perform tracking control using the push-pull method, so that the reflected optical beam from the non-target layer can be limited.

Configurations of an optical system of the optical-storage-medium reproducing apparatus and the optical-pickup head device according to a third embodiment are the same as those explained in the second embodiment with reference to Fig. 6. According to the optical-pickup head device according to the third embodiment, a configuration of the aperture splitting of the polarizing element 1004 is different from that explained in the second embodiment. Further, the control unit 121 in the optical-pickup head device according to the third embodiment performs the focus servo using the double knife edge method and the tracking servo using the push-pull method.

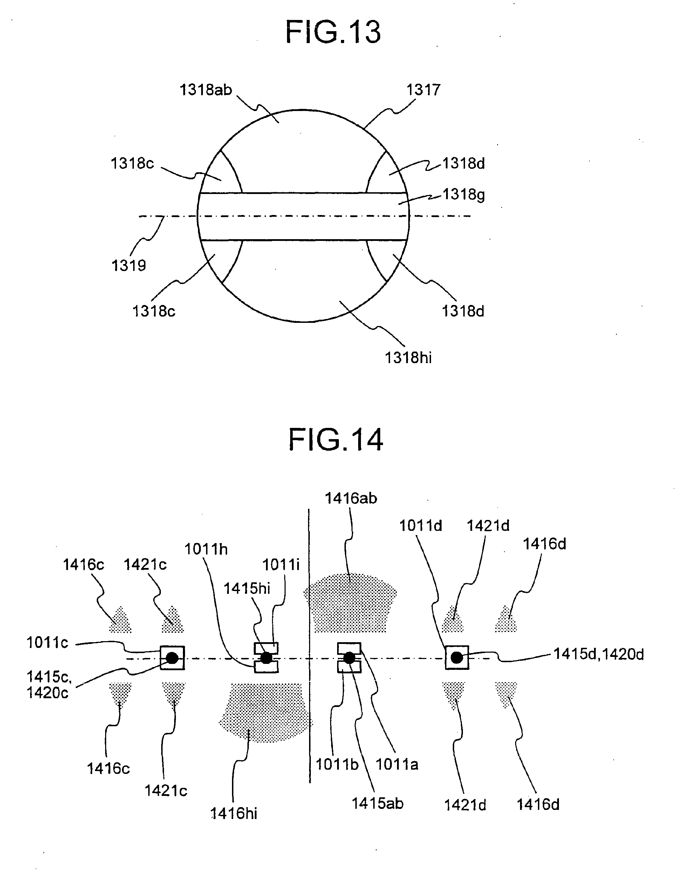

As shown in Fig. 13, an aperture splitting of the polarizing element 1004 according to the third embodiment has a configuration corresponding to the light receiving unit 1011 that can perform the focus servo using the double knife edge method and the tracking servo using the push-pull method, with the reflected optical beam reflected from the target layer 106.

An aperture 1317 of the polarizing element 1004 is split into seven areas 1318ab, two 1318c, two 1318d, 1318g, and 1318hi. The reflected optical beam reflected from the target layer 106 passes through the areas 1318ab, two 1318c, two 1138d, and 1318hi among the seven areas, and each beam from each area is detected at each of the corresponding light receiving units 1011a, 1011b, 1011c, 1011d, 1011h, and 1011i. The areas 1318c and 1318d are arranged in the areas, through which the first-order diffracted beams reflected from the target layer 106 pass.

The area 1318g is formed to include portions around the optical axis, through which the zeroth-order diffracted beam reflected from the non-target layer 107 passes, and the center portion of the push-pull area, through which the first-order diffracted beams reflected from the non-target layer 107 pass. Accordingly, the zeroth-order diffracted beam and the first-order diffracted beams reflected from the non-target layer 107 can be diffracted.

According to the third embodiment, the light receiving unit 1011 of the optical detecting unit 110 is split into six areas. In Fig. 14, it is assumed that an arrangement order of the target layer 106 and the non-target layer 107 shown in Fig. 6 is inverted. Namely, the target layer 106 is arranged at a far side from the surface to which the optical beam is input, while the non-target layer 107 is arranged at a near side of the surface to which the optical beam is input. Further, a state in which the reflected optical beam reflected from the non-target layer 107 is defocused is shown in Fig. 14.

The light receiving unit 1011 is split into the six light receiving units 1011a, 1011b, 1011c, 1011d, 1011h, and 1011i as shown in Fig. 14. Based on a sum signal generated by summing the difference signal between signals generated from the light receiving units 1011a and 1011b, and the difference signal between signals generated from the light receiving units 1011h and 1011i, the focus error signal used with the double knife edge method is generated. Based on the difference signal between signals generated from the light receiving units 1011c and 1011d, the push-pull signal, as the tracking error signal, is generated.

As shown in Figs. 13 and 14, the reflected optical beam reflected from the target layer 106 is diffracted by each of the areas 1318ab, 1318c, 1318d, and 1318hi, with an efficiency of virtually 100%, to irradiate each of the light receiving units 1011a, 1011b, 1011c, 1011d, 1011h, and 1011i.

The area 1318g in the polarizing element 1004 diffracts the reflected optical beam from the non-target layer 107 to limit the irradiation of the reflected optical beam from the non-target layer 107 to the light receiving units 1011a, 1011b, 1011c, 1011d, 1011h and 1011i. Specifically, the area 1318g in the polarizing element 1004 diffracts the reflected optical beam from the non-target layer 107, in a direction other than the directions toward the light receiving units 1011a, 1011b, 1011c, 1011d, 1011h, and 1011i.

In Fig. 14, each of area 1415ab, 1415c, 1415d, 1415hi, 1420C, and 1420d is the optical spot at which the reflected optical beam from the target layer 106 is condensed on each of the light receiving units 1011a, 1011b, 1011c, 1011d, 1011h, and 1011i. Areas 1416ab, 1416c, 1416d, 1416h, and 1416i depict the irradiation of the zeroth-order diffracted beam reflected from the non-target layer 107. Areas 1421c and 1421d depict the irradiation of the first-order diffracted beams reflected from the non-target layer 107.

According to the third embodiment, the zeroth-order diffracted beam and the first-order diffracted beam reflected from the non-target layer 107 can be diffracted by the polarizing element 1004 so that the irradiation to the light receiving units 1011a, 1011b, 1011c, 1011d, 1011h, and 1011i can be limited. On the other hand, the reflected optical beam reflected from the target layer 106 is condensed at each of the light receiving units 1011a, 1011b, 1011c, 1011d, 1011h, and 1011i to generate the optical spots. Further, the light receiving units that can perform the double knife edge method for the focus control is included. As a result, the reflected optical beam from the target layer 106 and the reflected optical beam from the non-target layer 107 can be separated, the interlayer crosstalk can be reduced, and highly precise focus control can be realized.

According to a fourth embodiment, a configuration of splitting the polarizing element 1004 is such that areas for diffracting the reflected optical beam reflected from the non-target layer 107 are arranged in the area around the optical axis and in the area through which the first-order diffracted beams pass (the center portion of the push-pull area).

Configurations of an optical system of the optical-storage-medium reproducing apparatus and the optical-pickup head device according to the fourth embodiment are the same as those explained in the second embodiment with reference to Fig. 6. According to the fourth embodiment, a configuration of the aperture splitting of the polarizing element 1004 is different from those explained in the second embodiment and in the third embodiment.

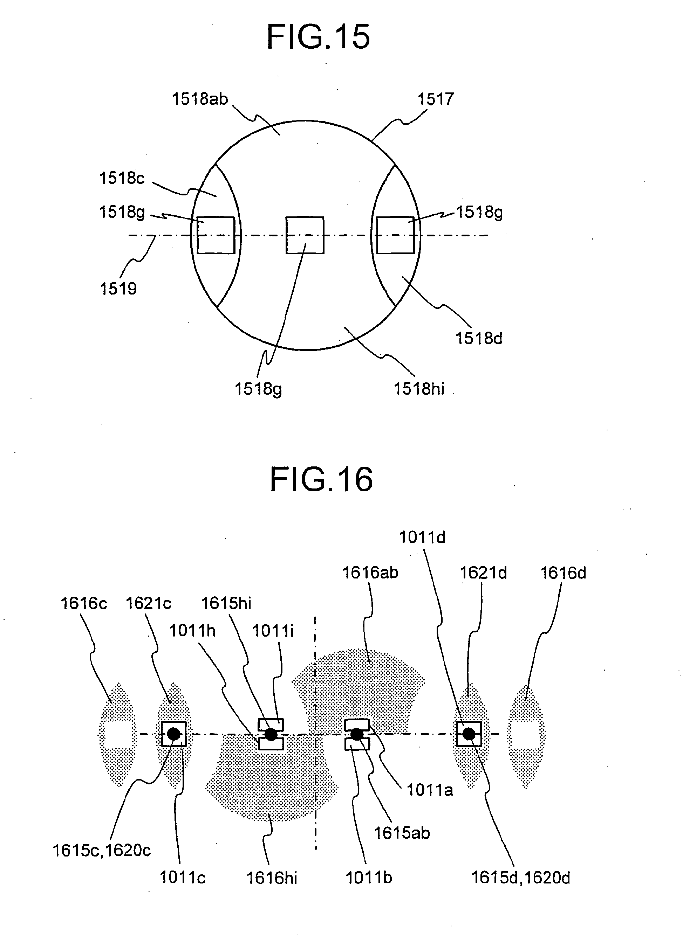

As shown in Fig. 15, an aperture splitting of the polarizing element 1004 according to the fourth embodiment has a configuration, as with the same configuration explained in the third embodiment, corresponding to the light receiving unit 1011 that can perform the focus servo using the double knife edge method and the tracking servo using the push-pull method, with the reflected optical beam reflected from the target layer 106.

An aperture 1517 of the polarizing element 1004 is split into seven areas 1518ab, 1518c, 1518d, three 1518g, and 1518hi. The reflected optical beam from the target layer 106 passes through the areas 1518c, 1518d, 1518ab, and 1518hi among the seven areas, and each beam from each area is detected at each of the corresponding light receiving units 1011c, 1011d, 1011a, 1011b, 1011h, and 1011i. The areas 1518c and 1518d are arranged in the areas, through which the first-order diffracted beams reflected from the target layer 106 pass.

Each of three areas 1518g is formed to include portions around the optical axis, through which the zeroth-order diffracted beam reflected from the non-target layer 107 passes, and the center portion of the push-pull area, through which the first-order diffracted beams reflected from the non-target layer 107 pass, so that the zeroth-order diffracted beam and the first-order diffracted beams reflected from the non-target layer 107 can be diffracted.

According to the fourth embodiment, the light receiving unit 1011 of the optical detecting unit 110 is split into six areas, as the same with those in the second embodiment. In Fig. 16, it is assumed that an arrangement order of the target layer 106 and the non-target layer 107 shown in Fig. 6 is inverted. Namely, the target layer 106 is arranged at a far side from a surface to which the optical beam is input, while the non-target layer 107 is arranged at a near side of the surface to which the optical beam is input. Further, a state in which the reflected optical beam reflected from the non-target layer 107 is defocused is shown in Fig. 16.

The light receiving unit 1011 is split into the six light receiving units 1011a, 1011b, 1011c, 1011d, 1011h, and 1011i as shown in Fig. 16. Based on a sum signal generated by summing the difference signal between signals generated from the light receiving units 1011a and 1011b, and the difference signal between signals generated from the light receiving units 1011h and 1011i, the focus error signal used with the double knife edge method is generated. Based on the difference signal between signals generated from the light receiving units 1011c and 1011d, the push-pull signal, as the tracking error signal, is generated.

As shown in Figs. 15 and 16, the reflected optical beam reflected from the target layer 106 is diffracted by each of the areas 1518ab, 1518c, 1518d, and 1518hi, with an efficiency of virtually 100%, to irradiate each of the light receiving units 1011a, 1011b, 1011c, 1011d, 1011h, and 1011i.

Each of three areas 1518g in the polarizing element 1004 diffracts the reflected optical beam reflected from the non-target layer 107 to limit the irradiation of the reflected optical beam reflected from the non-target layer 107 to the light receiving units 1011a, 1011b, 1011c, 1011d, 1011h and 1011i. Specifically, the areas 1518g in the polarizing element 1004 diffract the reflected optical beam reflected from the non-target layer 107 in a direction other than the directions toward the light receiving units 1011a, 1011b, 1011c, 1011d, 1011h, and 1011i.

In Fig. 16, each of areas 1615ab, 1615c, 1615d, 1615hi, 1620C, and 1620d is the optical spot at which the reflected optical beam reflected from the target layer 106 is condensed on each of the corresponding light receiving units 1011a, 1011b, 1011c, 1011d, 1011h, and 1011i, Areas 1616ab, 1616c, 1616d, 1616h, and 1616i depict the irradiation of the zeroth-order diffracted beam reflected from the non-target layer 107. Areas 1621c and 1621d depict the irradiation of the first-order diffracted beams reflected from the non-target layer 107.

According to the fourth embodiment, the zeroth-order diffracted beam and the first-order diffracted beams reflected from the non-target layer 107 can be diffracted by the polarizing element 1004 so that the irradiation to the light receiving units 1011a, 1011b, 1011c, 1011d, 1011h, and 1011i can be limited. On the other hand, the reflected optical beam reflected from the target layer 106 is condensed at each of the light receiving units 1011a, 1011b, 1011c, 1011d, 1011h, and 1011i to generate the optical spots. Further, the light receiving units that can perform the double knife edge method for the focus control is included. As a result, the reflected optical beam reflected from the target layer 106 and the reflected optical beam from the non-target layer 107 can be separated, the interlayer crosstalk can be reduced, and highly precise focus control can be realized.

According to the fourth embodiment, the areas 1518g in the polarizing element 1004 are formed around the optical axis, through which the zeroth-order diffracted beam reflected from the non-target layer 107 passes, and the center portion of the push-pull area, through which the first-order diffracted beams reflected from the non-target layer 107 pass, so that the zeroth-order diffracted beam and the first-order diffracted beam reflected from the non-target layer 107 can be diffracted. As a result, light use efficiency can be improved.

The splitting configurations of the polarizing element 1004 and the configurations of the light receiving units in the optical-pickup head devices according to the second to the fourth embodiments of the present invention are not limited to those explained. Other configurations that can diffract the reflected optical beam reflected from the non-target layer 107 used not for the recording and the reproduction to limit the irradiation onto the light receiving units can be applied.

According to the first to the fourth embodiments, the receiving portions of the optical detecting unit 110 are configured for detecting the reflected optical beam reflected from the target layer 106. With the configurations explained above, because use efficiency of the reflected optical beam is sacrificed, it is difficult to completely separate the reflected optical beam reflected from the target layer 106. It is also difficult to reduce the size of the light receiving units due to physical reasons or reasons related to a required precision of adjustment. However, for the physical limitations of the size of the light receiving unit, an area for receiving the light can be limited by covering a portion of the light receiving unit, for example, with a seal attached, through which a small opening portion is formed on the large light receiving unit. For the light use efficiency, it is possible to realize the same or better effects to the interlayer crosstalk as the effects realized with the conventional technologies, by reducing interference of other information-recording layers through a use of, for example, the partial attenuation filter or minute aperture limiting. Further, for improving the light use efficiency when the single-sided single layer disk is used, it is required to use an electronic control unit, such as the liquid crystal element, for the aperture limiting.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1. An optical-pickup head device for an optical storage medium (115) that includes a plurality of information-recording layers (106,107), comprising:

    a light source (100) that outputs an optical beam;
    a condensing unit (105) that condenses the optical beam to a first information-recording layer (106) ;
    an optical detecting unit (111, 1011) that detects a reflected optical beam reflected from the optical storage medium (115); and
    a limiting element (114, 1004) that inputs a first reflected optical beam reflected from the first information-recording layer (106) to the optical detecting unit (111, 1011), and limits or shields an input of a second reflected optical beam reflected from a second information-recording layer (107) to the optical detecting unit (111, 1011).

2. The device according to claim 1, wherein
the limiting element (114, 1004) diffracts the second optical beam in an area including at least a position through which the second reflected optical beam passes.

3. The device according to claim 1, wherein
the limiting element (114) limits optical intensity of the second optical beam in an area including at least a position through which the second reflected optical beam passes.

4. The device according to claim 2, wherein
the optical detecting unit (1011) includes
a first light receiving unit (1011a, 1011b) for generating a focus error signal;
a second light receiving unit (1011c, 1011d) for generating a tracking error signal; and
a third light receiving unit (1011e, 1011f) for adjusting the tracking error signal, and
the limiting element (1004) inputs the first optical beam to the first light receiving unit(1011a, 1011b), the second light receiving unit (1011c, 1011d), and the third light receiving unit (1011e, 1011f), and diffracts the second optical beam to a direction deviated from directions to the first light receiving unit (1011a, 1011b), the second light receiving unit (1011c, 1011d), and the third light receiving unit (1011e, 1011f).

5. The device according to claim 2, wherein
the optical detecting unit (1011) includes
a first light receiving unit (1011a, 1011b, 1101h, 1011i) for generating a focus error signal; and
a second light receiving unit (1011c, 1011d) for generating a tracking error signal, and
the limiting element (1004) inputs the first optical beam to the first light receiving unit (1011a, 1011b, 1101h, 1011i) and the second light receiving unit (1011c, 1011d), and diffracts the second optical beam to a direction deviated from directions to the first light receiving unit (1011a, 1011b, 1101h, 1011i) and to the second light receiving unit (1011c, 1011d).

6. An apparatus for reproducing an optical storage medium (115) that includes a plurality of information-recording layers (106, 107), comprising:

   a light source (100) that outputs an optical beam;
   a condensing unit (105) that condenses the optical beam to a first information-recording layer (106);
   an optical detecting unit (111) that detects a reflected optical beam reflected from the optical storage medium (115); and
   a limiting element (114, 1004) that inputs a first reflected optical beam reflected from the first information-recording layer (106) to the optical detecting unit (111, 1011), and limits or shields an input of a second reflected optical beam reflected from a second information-recording layer (107) to the optical detecting unit (111, 1011).

7. A method of reproducing an optical storage medium (115) that includes a plurality of information-recording layers (106, 107), comprising:

   condensing an optical beam output from a light source (100) to a first information-recording layer (106);
   detecting including an optical detecting unit (111, 1011) detecting a reflected optical beam reflected from the optical storage medium (115); and
   limiting including
   inputting a first reflected optical beam reflected from the first information-recording layer (106) to the optical detecting unit (111, 1011); and
   either one of limiting and shielding an input of a second reflected optical beam reflected from a second information-recording layer (107) to the optical detecting unit (111, 1011).

# FIG.1

# FIG.2

# FIG.3

# FIG.4

# FIG.5

316

315

111

# FIG.6

# FIG.7

107

106

105

# FIG.8

107

106

105

801    801

# FIG.9

# FIG.10

DISTRIBUTION OF REFLECTED BEAM

## FIG.11

## FIG.12

# FIG.13

# FIG.14

# FIG.15

1518ab 1517

1518c

1518g 1518g

1519

1518g 1518hi

1518d

# FIG.16

1011d

1616ab 1621d 1616d

1616c 1621c 1615hi

1011h 1011i

1011a

1615ab

1615c,1620c

1011c 1616hi 1011b 1615d,1620d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006051284 A

- JP 2004281026 A, KOKAI